Europäisches Patentamt

European Patent Office

Office européen des brevets

(19)

(11)  EP 1 339 209 A1

(12)  **DEMANDE DE BREVET EUROPEEN**

(43) Date de publication:
    **27.08.2003  Bulletin 2003/35**

(51) Int Cl.⁷: **H04M 11/06**

(21) Numéro de dépôt: **03101189.3**

(22) Date de dépôt: **29.04.2003**

(84) Etats contractants désignés:
    **AT BE BG CH CY CZ DE DK EE ES FI FR GB GR
    HU IE IT LI LU MC NL PT RO SE SI SK TR**
    Etats d'extension désignés:
    **AL LT LV MK**

(30) Priorité: **20.12.2002  FR 0216681**

(71) Demandeur: **Laboratoire Europeen ADSL
    Leacom Fastnet
    35510 Cesson Sevigne (FR)**

(72) Inventeur: **Cazalet, Alain
    35200 Rennes (FR)**

(74) Mandataire: **Camus, Olivier Jean-Claude
    Cabinet Christian Schmit & Associés,
    8, place du Ponceau
    95000 Cergy (FR)**

(54)  **Filtre passe bas destiné aux lignes téléphoniques adaptées à la transmission ADSL**

(57)  La présente invention a pour objet un filtre passe-bas (400) disposé côté abonné sur une ligne téléphonique susceptible de faire circuler simultanément des premiers signaux correspondant à des services bande étroite, et des seconds signaux correspondant à des services large bande. Le filtre passe bas (400) selon l'invention propose une architecture particulière de filtres qui fait notamment intervenir au moins un élément correcteur (403,404) incorporant une résistance (R1,R2) permettant d'introduire des pertes supplémentaires pour les signaux filtrés, ceci afin de respecter essentiellement une contrainte liée au facteur d'affaiblissement de réflexion. En outre, dans l'invention, on propose différents jeux de valeurs des différents composants intervenant dans cet unique filtre, chaque jeu de valeurs étant plus particulièrement adapté à une utilisation dans un pays spécifique.

Fig. 4

EP 1 339 209 A1

## Description

La présente invention a pour objet un dispositif de filtrage passe-bas intervenant dans le découplage des voies ADSL. Elle est destinée à être incorporée dans un dispositif séparateur de signaux voix-données pour une transmission sur des voies ADSL. Elle propose une réalisation particulière de filtres, particulièrement adaptée à certaines caractéristiques imposées par les normes choisies par différents pays.

Le dispositif de filtrage selon l'invention est essentiellement destiné à être utilisé dans des installations privatives. De telles installations correspondent à des IPC (pour Infrastructure Privative Client), qui démarrent à la réglette du domicile et comprennent l'ensemble des câbles, paires de cuivre et prises téléphoniques. Elles sont raccordées à un réseau d'accès à des services bande étroite et à des services large bande. Dans la pratique, ces installations désignent essentiellement les installations téléphoniques et téléinformatiques qui sont raccordées, via une ligne téléphonique, au réseau téléphonique et qui comprennent un ou plusieurs terminaux bande étroite tels que, par exemple, les postes téléphoniques, les fax ou les modems, et un terminal large bande dont le fonctionnement permet exploiter les technologies ADSL.

Le domaine de l'invention est, d'une façon générale, celui de la technologie dite ADSL (pour Asymmetric Digital Subscriber Line, en anglais, pour ligne d'abonné numérique à débit asymétrique). Cette technologie est essentiellement mises en oeuvre sur des boucles locales des réseaux de téléphonie existant, la boucle locale étant constituée par les intermédiaires du réseau entre un central téléphonique et un poste d'abonné. Un des objectifs essentiels de cette technologie est de rendre possible, sur les boucles locales des anciens réseaux de téléphonie, la transmission simultanée de différents types de signaux : d'une part, les signaux relatifs aux conversations téléphoniques habituelles entre deux abonnés, ces premiers signaux comprenant des signaux relatifs à la voix et des signaux de signalisation, et d'autre part, des signaux relatifs à des données, typiquement des informations échangées entre un abonné et un site accessible via le réseau Internet.

Pour des transmissions selon cette technologie, on utilise donc la paire de fils de cuivre qui arrive chez l'abonné, et qui constitue depuis longtemps la ligne téléphonique, ou boucle d'abonné, à laquelle sont raccordés les différents combinés téléphoniques de l'utilisateur des réseaux analogiques traditionnels dits POTS (pour Plain Old Transmission System-système ancien de télécommunications) ou des réseaux numériques traditionnels dits ISDN (ou RNIS - réseau numérique à intégration de services). Cette paire de fils de cuivre est le plus souvent torsadée et comporte une gaine isolante en polyéthylène.

Sur cette paire de fils de cuivre, on transmet donc à la fois :

- en bande de base, des signaux analogiques non modulés correspondant aux réseaux POTS, ou des signaux numériques correspondant aux réseaux ISDN. Les signaux analogiques en bande de base sont de fréquence typiquement 0 à 4 kHz, ou 0 à 16 KHz si on tient compte des signaux de signalisation. Les signaux numériques en bande de base sont dans des fréquences de 0 à 94 KHz. En pratique, la bande de base est destinée à une transmission en mode circuit;

- en bande haute fréquence, d'autres signaux, numériques et modulés, qui correspondent par exemple aux informations échangées avec le réseau Internet. La bande haute s'étale du dessus de la bande de base téléphonique jusqu'à 1 MHz environ. En pratique la bande haute fréquence s'étale de 32 KHz à 1,1MHz si la paire de fils de cuivre sert en bande de base pour une transmission analogique POTS, et de 138 KHz à 1,1 MHz si elle sert pour une transmission numérique. Elle est normalement destinée à une transmission permanente, en mode paquets principalement, c'est à dire qu'une communication permanente est établie entre l'abonné et le central téléphonique. On est ainsi dispensé des opérations classiques intervenant lors d'une connexion avec accès par ligne commutée, qui est une méthode de connexion temporaire à un réseau informatique consistant à utiliser un modem, un logiciel de connexion et le réseau téléphonique commuté comme moyen de mise en communication de son propre ordinateur et d'un autre ordinateur du réseau.

Bien que la bande de base puisse être utilisée, notamment avec des modems de préférence numériques, pour transmettre des données, et que la bande haute fréquence puisse servir à assurer des communications phoniques dans le cadre de communications dites communications téléphoniques sur Internet, on considérera, de façon schématique, et dans un souci de simplification des explications, que la bande de base est utilisée pour la transmission d'un premier type de signaux, essentiellement des paroles, correspondant à des communications phoniques, et que la bande haute fréquence sert pour la transmission d'un deuxième type de signaux, essentiellement des données, relatives notamment à la consultation de sites Internet.

La bande de base n'est capable que d'un faible débit (actuellement 56 Kbits/s pour les modems analogiques et 64 Kbits/s pour les modems numériques) alors que la bande haute fréquence est susceptible de présenter un haut débit (pouvant avoisiner 10 Mbits/s).

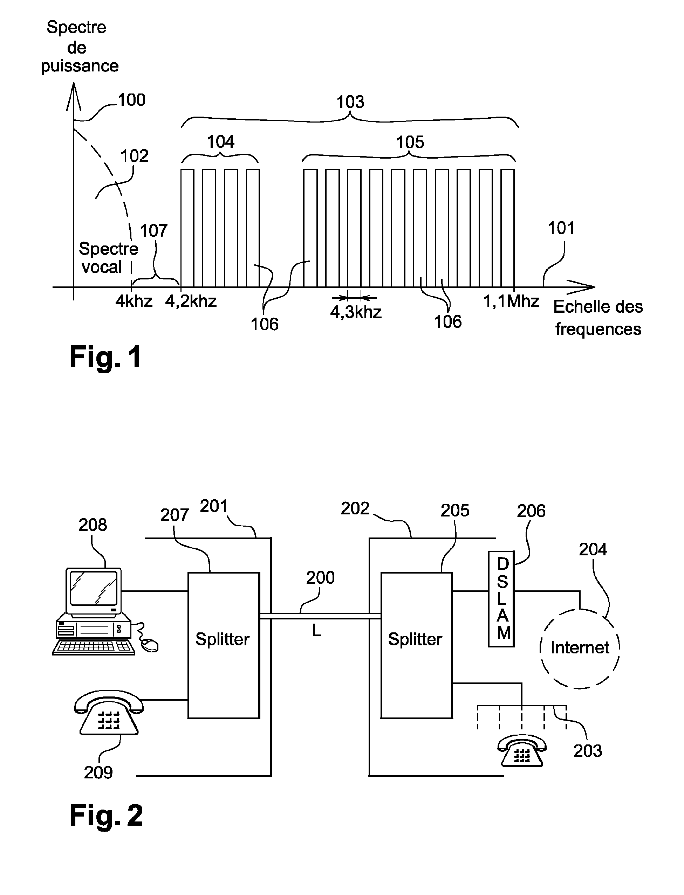

La figure 1 illustre l'exploitation de la bande de fréquence en distribution ADSL. L'axe des ordonnées 100 échelonne la puissance des signaux émis, et l'axe des abscisses 101 donne l'échelle des fréquences. Les puissances émises sont représentées de façon équirépartie dans un but de simplification. On retrouve le spectre vocal 102 s'étendant de 0 à 4 kHz, et le spectre 103 utilisé pour la transmission de données selon la technologie ADSL, ce dernier s'étendant d'environ 30 kHz à 1,1 MHz. Le spectre 103 est divisé en deux parties principales : une première bande de fréquence 104 correspondant au spectre utilisé pour les données montantes (de l'abonné vers le central) et une deuxième bande de fréquence 105 correspondant au spectre utilisé pour les données descendantes (du central vers l'abonné). La deuxième bande de fréquence 105 est plus large que la première bande de fréquence 104 car les données montantes, qui correspondent le plus souvent à des requêtes émises par un abonné, sont le plus souvent moins nombreuses que les données descendantes, qui peuvent correspondre au téléchargement de gros fichiers, des images par exemple.

L'utilisation d'une ligne dite ADSL nécessite donc de séparer la bande de base, basse fréquence, de la bande haute fréquence. La figure 2 illustre schématiquement ces séparations au niveau d'une boucle locale de communication. Sur cette figure, on a représenté une ligne téléphonique usuelle 200, ou boucle d'abonné, composée de deux fils en cuivre, qui assure la liaison entre un abonné 201, qui dispose d'une installation privative, et un central téléphonique 202.

Le central téléphonique 202 assure la connexion à un réseau de téléphonie classique 203 et à un réseau de type Internet 204. Afin de dissocier les signaux destinés au réseau téléphonique 203 et au réseau Internet 204, un premier dispositif 205 séparateur de signaux voix-données, également appelé filtre à aiguillage ou splitter, est utilisé. D'une façon générale, un splitter est un dispositif électronique associé à un modem ADSL qui permet de séparer les signaux de la voix des signaux de données et de les acheminer sur deux voies différentes. Le splitter 205 sera désigné par la suite comme splitter central. Les données destinées au - ou provenant du-réseau Internet 204 transitent par un multiplexeur d'accès DSL 206, appelé DSLAM (pour Digital Subscriber Line Access Multiplexer en anglais), qui est relié au splitter central 205.

Du côté de l'abonné 201, on trouve également un splitter 207 relié à la ligne téléphonique 200. Le splitter 207 est appelé splitter maître. Le splitter maître 207 a pour fonction de séparer, côté abonné, les signaux de données, qui sont orientés vers un ordinateur personnel 208 associé à un modem ADSL, et les signaux de voix, qui sont orientés vers des combinés téléphoniques classiques 209. Chaque téléphone 209 connecté à la même ligne 200 doit être protégé par un filtre passe-bas 211 contenu dans le splitter 207. La compacité de ces filtres les a consacrés sous l'appellation micro-filtres.

En théorie, on trouve également dans le splitter maître 207 un filtre haute fréquence 210, qui laisse passer les signaux ADSL. Dans la pratique, le filtre basse fréquence 211 du splitter 207 et le filtre haute fréquence 210 sont séparés et distincts. Le filtre haute fréquence 210, c'est à dire le filtre qui laisse passer les signaux de données et uniquement ceux-là, est disposé, côté abonné, entre la ligne téléphonique 200 et l'ordinateur personnel 208. Le filtre haute fréquence 210 peut être incorporé, partiellement ou totalement, dans un modem ADSL. Le filtre basse fréquence 211 est, pour sa part, disposé côté abonné entre la ligne téléphonique 200 et chaque combiné téléphonique classique 209. Le filtre basse fréquence 211 sert à empêcher que les signaux phoniques ne soient perturbés par les signaux de données. L'objet de l'invention est la réalisation d'un tel filtre correspondant au respect des contraintes d'une norme particulière.

L'installation des filtres, et notamment des filtres passe-bas, doit satisfaire à plusieurs contraintes dictées par différentes normes:

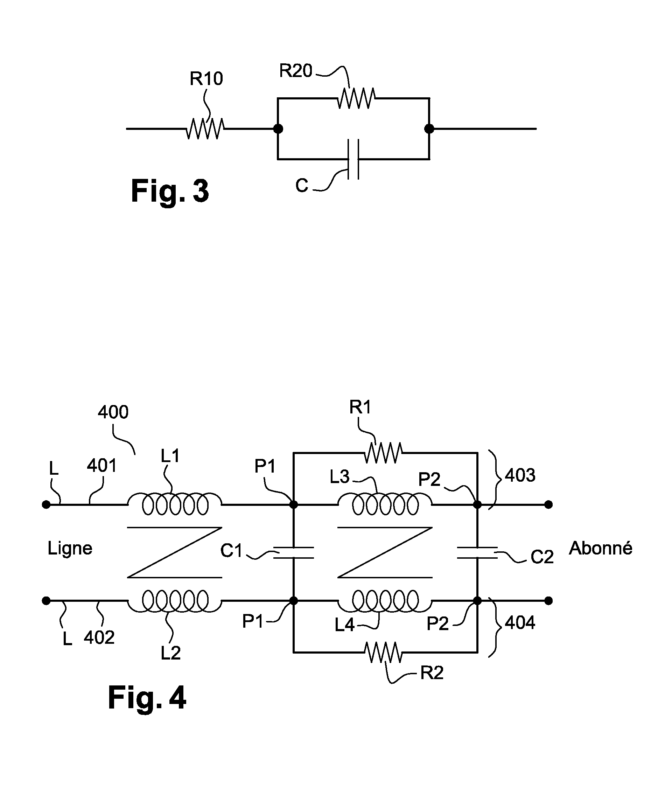

-    le respect de valeurs d'impédances d'entrée et de sortie imposées. Afin que la puissance transmise par la ligne téléphonique le soit avec le meilleur rendement possible, les lignes téléphoniques doivent être caractérisées, en entrée et en sortie, par une impédance ayant une valeur aussi proche que possible de l'impédance complexe caractéristique de la ligne téléphonique. L'introduction de filtres sur la ligne téléphonique doit respecter ce principe. On appelle Zc une telle impédance caractéristique. Dans la pratique Zc est une valeur imposée par une norme, la norme en question pouvant être différente d'un pays à l'autre. On trouve ainsi notamment l'impédance européenne harmonisée, l'impédance anglaise, l'impédance allemande, et deux impédances américaines dites à 600 ohms et 900 ohms respectivement. Les différences entre ces impédances dépendent notamment du diamètre des fils de cuivre utilisés, de l'isolant et du pas des torsades. Typiquement, une impédance caractéristique peut être modélisée sous la forme représenté à la figure 3, sur laquelle une première résistance R10 est disposée en série avec une deuxième résistance R20, elle-même montée en parallèle avec un condensateur C. L'impédance équivalente à ce montage est $Zc=R10+R20*(1-jR20Cw)/(1+(R20Cw)^2)$, où w représente la pulsation d'un signal circulant sur la ligne téléphonique. Lors de l'insertion d'un splitter sur la ligne téléphonique, il convient de s'assurer que les impédances d'entrée et de sortie du splitter sont suffisamment proches de l'impédance caractéristique de ligne. On assure ainsi une meilleure transmission et on minimise chez l'abonné le phénomène d'écho local.

-    le facteur dit d'affaiblissement d'insertion, ou ILF (pour Insertion Loss Factor en anglais), qui mesure un affaiblissement de puissance d'une voie de transmission lorsqu'il s'y trouve des montages en pont, des filtres, des égaliseurs ou d'autres montages. Dans le cas présent, ce facteur mesure la perte de transmission occasionnée dans le circuit par la mise en place d'un filtre, entre une situation où le filtre n'est pas présent et une situation où il est mis en place ; selon la plupart des normes en vigueur, cette perte doit être inférieure à 1 dB à 1 kHz. La distorsion d'atténuation devant être, en valeur absolue, inférieure à 1 dB par rapport à l'atténuation constatée à 1 kHz.

- le facteur dit d'affaiblissement de réflexion, ou RLF (pour Return Loss en anglais), qui est une mesure liée à la puissance de signal réfléchi par rapport à la puissance de signal transmissible. Il s'exprime par la formule suivante :

RLF=20 log 10 abs(((Zin(w)+Zc(w)) / ((Zin(w)-Zc(w))),

où Zin(w) mesure l'impédance d'entrée du dispositif dont on veut mesurer le RLF, et où Zc(w) est l'impédance d'une charge de référence. On voit clairement que le Return Loss correspond à une mesure d'adaptation d'impédance. Lorsque l'adaptation est parfaite (Zin(w)=Zc(w)), le Return Loss tend vers l'infini. Dans les normes, l'affaiblissement de réflexion pour un filtre basse fréquence doit être supérieur à environ 18 dB dans la bande de base utile (300 - 3400 Hz en réseau POTS, et 300 - 94000 Hz en réseau ISDN).

- le facteur dit d'atténuation en bande ADSL, qui détermine une perte de puissance à faire subir aux signaux dont la fréquence appartient aux fréquences ADSL ;
- le facteur dit de distorsion d'insertion (insertion distortion en anglais), qui impose un variation maximale du facteur d'affaiblissement d'insertion.

Pour tenter de satisfaire à toutes ces contraintes, il a été imaginé différents types de filtres basse fréquence. Une des solutions préférées de l'état de la technique est l'utilisation de filtres elliptiques, également appelés filtres de Cauer, connues de l'homme du métier. Ces filtres ne sont cependant pas adaptés à des lignes dont la modélisation de l'impédance caractéristique est complexe.

Un des objets essentiels de l'invention est de proposer un filtre passe-bas qui répond notamment aux critères de la norme Européenne harmonisée et aux critères de la norme utilisée en Grande-Bretagne. Ces critères sont notamment relatifs aux différentes contraintes qui viennent d'être exposés. Ainsi, le filtre selon l'invention doit satisfaire les conditions suivantes :

- facteur d'affaiblissement inférieur à 1 décibel pour une fréquence de 1000 Hz ;
- facteur de distorsion d'insertion de 1,1 décibel pour le facteur d'affaiblissement des signaux compris entre 200 Hz et 4000 Hz ;
- facteur d'atténuation en bande ADSL supérieur à 15 décibels pour les signaux dont les fréquences sont comprises entre 32 kHz et 60 kHz, et supérieur à 25 décibels pour les signaux dont les fréquences sont comprises entre 60 kHz et 600 kHz ;

- facteur d'affaiblissement de réflexion supérieur à :

  • 14 pour les signaux dont les fréquences sont comprises ente 300 Hz et 500 Hz ;
  • 18 pour les signaux dont les fréquences sont comprises ente 500 Hz et 2 kHz ;
  • 14 pour les signaux dont les fréquences sont comprises ente 2kHz et 3,4 kHz.

Ces contraintes sont identiques pour différents pays, notamment le France, l'Italie, l'Espagne ou la Grande-Bretagne. Le filtre passe-bas selon l'invention permet d'obtenir des résultats en fonctionnement qui satisfait à ces différentes contraintes. A cet effet, le filtre passe bas propose une architecture particulière de filtres qui fait notamment intervenir au moins un élément correcteur incorporant une résistance permettant d'introduire des pertes supplémentaires pour les signaux filtrés, ceci essentiellement afin de respecter la contrainte liée au facteur d'affaiblissement de réflexion. En outre, dans l'invention, on propose différents jeux de valeurs des différents composants intervenant dans le filtre, notamment la résistance présente dans au moins un élément correcteur, chaque jeu de valeurs étant plus particulièrement adapté à une utilisation dans un pays spécifique.

L'invention concerne donc essentiellement un dispositif de filtrage passe-bas disposé du côté abonné sur une ligne téléphonique composée d'une première ligne de transmission et d'une deuxième ligne de transmission, susceptible de faire circuler simultanément, entre un central téléphonique et un abonné équipé d'au moins un téléphone, des premiers signaux correspondant à des services bande étroite analogique et/ou numérique, et des seconds signaux correspondant à des services large bande caractérisé en ce que le dispositif de filtrage comporte :

- sur la première ligne de transmission, une première inductance en série avec un premier élément correcteur constitué d'une troisième inductance et d'une première résistance en parallèle avec ladite troisième inductance;
- sur la deuxième ligne de transmission, une deuxième inductance en série avec un deuxième élément correcteur constitué d'une quatrième inductance et d'une deuxième résistance en parallèle avec ladite quatrième inductance ;
- une première capacité reliant la première ligne de transmission et la deuxième ligne de transmission au niveau de points de connexion situés, sur la première ligne de transmission entre la première inductance et le premier élément correcteur, et sur la deuxième ligne de transmission entre la deuxième inductance et le deuxième élément correcteur;

- une deuxième capacité reliant la première ligne de transmission et la deuxième ligne de transmission au niveau de points de connexion situés, sur chaque ligne de transmission, à une sortie du filtre du côté de l'abonné.

L'invention et ses différentes applications seront mieux comprises à la lecture de la description qui suit et à l'examen des figures qui l'accompagnent. Celles-ci ne sont présentées qu'à titre indicatif et nullement limitatif de l'invention. Les figures montrent :

- à la figure 1, déjà décrite, une représentation de l'exploitation de la bande de fréquence en distribution ADSL ;
- à la figure 2, déjà décrite, une illustration du principe de la séparation des signaux basse fréquence et haute fréquence sur une ligne ADSL ;
- à la figure 3, déjà décrite, une modélisation d'une impédance caractéristique complexe d'une ligne téléphonique ;
- à la figure 4, une illustration du dispositif de filtrage passe-bas selon l'invention.

La figure 4 représente la structure générale d'un dispositif de filtrage passe-bas 400 de l'invention. Comme il l'a déjà été dit, le filtre représenté est destiné à être placé du côté abonné. Sur cette figure, une ligne téléphonique classique L est composée d'une première ligne de transmission 401, appelée brin A ou ligne TIP, et d'une deuxième ligne de transmission 402, appelée brin B ou ligne RING. La description de la figure représentant la structure du filtre s'effectue de gauche à droite, c'est à dire en partant, pour chaque ligne de transmission, du côté ligne, raccordé au central téléphonique, vers le côté abonné.

Sur la première ligne de transmission 401 et sur la deuxième ligne de transmission 402, on dispose respectivement une première inductance L1 et une deuxième inductance L2. Sur la figure, les inductances L1 et L2 sont représentées comme étant couplées. Dans une autre réalisation possible du filtre selon l'invention, les inductances L1 et L2 peuvent ne pas être couplées. Sur la première ligne de transmission 401, on dispose ensuite, en série avec la première inductance L1, un premier élément correcteur 403, constitué d'une troisième inductance L3 et d'une première résistance R1 en parallèle avec ladite troisième inductance L3. De façon symétrique, sur la deuxième ligne de transmission 402, on dispose en série avec la deuxième inductance L2, un deuxième élément correcteur 404, constitué d'une quatrième inductance L4 et d'une deuxième résistance R2 en parallèle avec ladite quatrième inductance L4. Là encore, les deux inductances L3 et L4 sont représentées comme couplées, mais dans une autre réalisation possible du filtre selon l'invention, les inductances L3 et L4 peuvent ne pas être couplées.

Une première capacité C1 relie les deux lignes de transmission 401 et 402 au niveau de points de connexion P1 situés, sur chaque ligne de transmission, entre les bobines L1 ou L2 et les éléments correcteurs 403 ou 404. Une deuxième capacité C2 relie les deux lignes de transmission 401 et 402 au niveau de points de connexion P2 situés, sur chaque ligne de transmission, en sortie du filtre 400, du côté de l'abonné A.

Une telle structure permet d'obtenir un filtre respectant les différentes contraintes qui ont été précédemment détaillées. En particulier, pour respecter des normes différentes telles que la norme Européenne harmonisée, choisie notamment par la France, l'Espagne ou encore l'Italie, ou une autre norme choisie par le Royaume-Uni, un filtre unique de structure identique à celle qui vient d'être décrite peut être utilisé, seules les valeurs des composants devant être adaptées.

Ainsi, dans le cas de la norme Européenne harmonisée, où l'impédance caractéristique correspond, en référence à la figure 3, à une résistance R10 de 270 ohms en série avec une résistance R20 de 750 ohms elle-même en parallèle avec une capacité C de 150 nanofarads, les valeurs des différents composants du filtre passe bas selon l'invention sont les suivantes :

- * L1=L2= 2,354 mH (milliHenry), avec une tolérance de 7,5 % (pour cent) quand L1 et L2 sont couplées.
- * L1=L2= 4,7 mH, avec une tolérance de 7,5 % quand L1 et L2 ne sont pas couplées.
- * L3=L4= 7,5 mH avec une tolérance de 7,5 % quand L1 et L2 sont couplées.
- * R1=R2= 100 'Ω (ohms) avec une tolérance de 5 %.
- * C1= 18 nF (nanoFarad) avec une tolérance de 10 %.
- * C2= 22 nF avec une tolérance de 10 %.

Dans le cas de la norme choisie en Grande-Bretagne, où l'impédance caractéristique correspond, en référence à la figure 3, à une résistance R10 de 320 ohms en série avec une résistance R20 de 1050 ohms elle-même en parallèle avec une capacité C de 230 nanofarads les valeurs des différents composants du filtre passe bas selon l'invention sont les suivants :

- * L1=L2= 2,354 mH, avec une tolérance de 7,5 % quand L1 et L2 sont couplées.
- * L1=L2= 4,7 mH, avec une tolérance de 7,5 % quand L1 et L2 ne sont pas couplées.
- * L3=L4= 7,5 mH avec une tolérance de 7,5 % quand L1 et L2 sont couplées.
- * R1=R2= 82 'Ω avec une tolérance de 5 %.
- * C1= 18 nF avec une tolérance de 10 %.
- * C2= 22 nF avec une tolérance de 10 %.

Le filtre passe-bas selon l'invention permet donc de s'adapter à différentes normes, qui caractérisent de manière différente l'impédance caractéristique de la ligne téléphonique. Seules les valeurs des résistances présentes pour amortir certains signaux changent de façon significative entre les différents jeux de valeurs proposés pour différents pays. De nombreux tests concluants ont été menés avec les différentes valeurs exactes qui viennent d'être données.

**Revendications**

1. Dispositif de filtrage passe-bas (400) disposé du côté abonné sur une ligne téléphonique (L) composée d'une première ligne de transmission (401) et d'une deuxième ligne de transmission (402), susceptible de faire circuler simultanément, entre un central téléphonique et un abonné (A) équipé d'au moins un téléphone (209), des premiers signaux correspondant à des services bande étroite analogique et/ou numérique, et des seconds signaux correspondant à des services large bande **caractérisé en ce que** le dispositif de filtrage comporte :

   - sur la première ligne de transmission (401), une première inductance (L1) en série avec un premier élément correcteur (403) constitué d'une troisième inductance (L3) et d'une première résistance (R1) en parallèle avec ladite troisième inductance (L3) ;
   - sur la deuxième ligne de transmission (402), une deuxième inductance (L2) en série avec un deuxième élément correcteur (404) constitué d'une quatrième inductance (L4) et d'une deuxième résistance (R2) en parallèle avec ladite quatrième inductance (L4) ;
   - une première capacité (C1) reliant la première ligne de transmission (401) et la deuxième ligne de transmission (402) au niveau de points de connexion (P1) situés, sur la première ligne de transmission (401) entre la première inductance (L1) et le premier élément correcteur (403), et sur la deuxième ligne de transmission (402) entre la deuxième inductance (L2) et le deuxième élément correcteur (404) ;
   - une deuxième capacité (C2) reliant la première ligne de transmission (401) et la deuxième ligne de transmission (402) au niveau de points de connexion (P2) situés, sur chaque ligne de transmission, à une sortie du filtre (400) du côté de l'abonné (A).

2. Dispositif de filtrage selon la revendication précédente **caractérisé en ce que** les valeurs des différents composants présents dans le dispositif de filtrage (400) sont les suivantes :

   - pour la première inductance (L1) et la deuxième inductance (L2), 2,354 mH, avec une tolérance de 7,5 %, quand la première inductance (L1) et la deuxième inductance (L2) sont couplées ;
   - pour la troisième inductance (L3) et la quatrième inductance (L4), 7,5 mH avec une tolérance de 7,5 %, quand la première inductance (L1) et la deuxième inductance (L2) sont couplées ;
   - pour la première résistance (R1) et pour la deuxième résistance (R2) 100 ohms avec une tolérance de 5 % ;
   - pour la première capacité (C1), 18 nanoFarads avec une tolérance de 10 % ;
   - pour la deuxième capacité (C2), 22 nanoFarads avec une tolérance de 10 %.

3. Dispositif de filtrage selon la revendication 1 **caractérisé en ce que** les valeurs des différents composants présents dans le dispositif de filtrage (400) sont les suivantes :

   - pour la première inductance (L1) et la deuxième inductance (L2), 4,70 mH, avec une tolérance de 7,5 %, quand la première inductance (L1) et la deuxième inductance (L2) ne sont pas couplées ;
   - pour la troisième inductance (L3) et la quatrième inductance (L4), 7,5 mH avec une tolérance de 7,5 %, quand la première inductance (L1) et la deuxième inductance (L2) sont couplées ;
   - pour la première résistance (R1) et pour la deuxième résistance (R2) 100 ohms avec une tolérance de 5 % ;
   - pour la première capacité (C1), 18 nanoFarads avec une tolérance de 10%;
   - pour la deuxième capacité (C2), 22 nanoFarads avec une tolérance de 10 %.

4. Dispositif de filtrage selon la revendication 1 **caractérisé en ce que** les valeurs des différents composants présents dans le dispositif de filtrage (400) sont les suivantes :

   - pour la première inductance (L1) et la deuxième inductance (L2), 2,354 mH, avec une tolérance de 7,5 %, quand la première inductance (L1) et la deuxième inductance (L2) sont couplées ;
   - pour la troisième inductance (L3) et la quatrième inductance (L4), 7,5 mH avec une tolérance de 7,5 %, quand la première inductance (L1) et la deuxième inductance (L2) sont couplées ;
   - pour la première résistance (R1) et pour la deuxième résistance (R2), 82 ohms avec une tolérance de 5 % ;
   - pour la première capacité (C1), 18 nanoFarads avec une tolérance de 10 % ;
   - pour la deuxième capacité (C2), 22 nanoFarads avec une tolérance de 10 %.

5. Dispositif de filtrage selon la revendication 1 **carac-**

**térisé en ce que** les valeurs des différents composants présents dans le dispositif de filtrage (400) sont les suivantes :

- pour la première inductance (L1) et la deuxième inductance (L2), 4,7 mH, avec une tolérance de 7,5 %, quand la première inductance (L1) et la deuxième inductance (L2) ne sont pas couplées ;
- pour la troisième inductance (L3) et la quatrième inductance (L4), 7,5 mH avec une tolérance de 7,5 %, quand la première inductance (L1) et la deuxième inductance (L2) sont couplées ;
- pour la première résistance (R1) et pour la deuxième résistance (R2), 82 ohms avec une tolérance de 5 % ;
- pour la première capacité (C1), 18 nanoFarads avec une tolérance de 10 % ;
- pour la deuxième capacité (C2), 22 nanoFarads avec une tolérance de 10 %.

**Fig. 1**

**Fig. 2**

R10   R20

C

**Fig. 3**

400

R1

L   401   L1   P1   L3   P2   403

Ligne   C1   C2   Abonné

L 402   P1   L4   P2   404

L2   R2

**Fig. 4**

**Office européen des brevets**

## RAPPORT DE RECHERCHE EUROPEENNE

Numéro de la demande

EP 03 10 1189

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | US 5 848 150 A (BINGEL THOMAS J) 8 décembre 1998 (1998-12-08) * colonne 7, ligne 5 - ligne 53; figure 6 * | 1 | H04M11/06 |
| A | | 2-5 | |
| A | WO 00 48314 A (NOKIA NETWORKS OY ;ELO HARRI (FI)) 17 août 2000 (2000-08-17) * figures 8-10 * | 1-5 | |
| A | US 6 144 735 A (BELLA GREGORY L) 7 novembre 2000 (2000-11-07) * colonne 8, ligne 38 - colonne 9; figure 6 * | 1-5 | |
| A | US 5 974 139 A (WILMONT D A ET AL) 26 octobre 1999 (1999-10-26) * figure 5 * | 1-5 | |

| DOMAINES TECHNIQUES RECHERCHES (Int.Cl.7) |
|---|
| H04M |

Le présent rapport a été établi pour toutes les revendications

| Lieu de la recherche | Date d'achèvement de la recherche | Examinateur |
|---|---|---|
| LA HAYE | 1 juillet 2003 | Mikkelsen, C |

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 03 10 1189

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

01-07-2003

| Document brevet cité au rapport de recherche | | Date de publication | Membre(s) de la famille de brevet(s) | | Date de publication |
|---|---|---|---|---|---|
| US 5848150 | A | 08-12-1998 | EP | 0956691 A1 | 17-11-1999 |
| | | | JP | 2001506831 T | 22-05-2001 |
| | | | WO | 9827713 A1 | 25-06-1998 |
| WO 0048314 | A | 17-08-2000 | FI | 990308 A | 16-08-2000 |
| | | | AU | 2674200 A | 29-08-2000 |
| | | | WO | 0048314 A1 | 17-08-2000 |
| US 6144735 | A | 07-11-2000 | US | 6115466 A | 05-09-2000 |
| | | | EP | 0942578 A2 | 15-09-1999 |
| US 5974139 | A | 26-10-1999 | AUCUN | | |

EPO FORM P0460